# EUROPEAN PATENT APPLICATION

(11) **EP 4 502 398 A1**
(43) Date of publication of application: **05.02.2025**
(21) Application number: 24190458.0
(22) Date of filing: 23.07.2024
(51) Int. Cl.: F15B 20/00, F15B 11/16

(54) **VALVE SYSTEMS**

(30) Priority: 31.07.2023 US 202318228608
(71) Applicant: Hamilton Sundstrand Corporation, Charlotte, NC 28217-4578 (US)
(72) Inventor: SUSCA, Ryan, Windsor, 06095 (US); MAROCCHINI, Francis P., Somers, 06071 (US); CORETTO, August M., Manchester, 06040 (US)
(74) Representative: Dehns

(57) **Abstract**

A system can include a first controllable valve (102), a second controllable valve (104), a transfer valve (106, 406), and a transfer control system. The first controllable valve (102) can be configured to output a control pressure on one or more first pressure control lines (1 10a, 1 10b). The second controllable valve (104) can be configured to output a control pressure on one or more second pressure control lines (112a, 112b). The transfer valve (106, 406) can be in fluid communication with the first controllable valve (102) and the second controllable valve (104). The transfer valve (106, 406) can be configured to move between a first position, a second position, and a third position.

## Description

### FIELD

This disclosure relates to valve systems.

### BACKGROUND

Traditional effector systems with gravity biases and/or distortions (e.g., engine nozzle actuators) can have controllability issues. For example, nozzle tilt can cause asymmetric loading on actuators, and a traditional actuator system cannot account for such asymmetric loading.

Such conventional methods and systems have generally been considered satisfactory for their intended purpose. However, there is still a need in the art for improvements. The present disclosure provides a solution for this need.

### SUMMARY

A system can include a first controllable valve, a second controllable valve, a transfer valve, and a transfer control system. The first controllable valve can be configured to output a control pressure on one or more first pressure control lines. The second controllable valve can be configured to output a control pressure on one or more second pressure control lines. The transfer valve can be in fluid communication with the first controllable valve and the second controllable valve. The transfer valve can be configured to move between a first position, a second position, and a third position.

The transfer valve can be configured to fluidly communicate the one or more first pressure control lines to a first functional system and the one or more second pressure control lines to a second functional system in the first position. The transfer valve can be configured to fluidly communicate the one or more second pressure control lines to the first functional system and the second functional system in the second position. The transfer valve can be configured to fluidly communicate the one or more first pressure control lines to the first functional system and the second functional system in the third position. The transfer control system can be configured to control a position of the transfer valve between the first, second, and third position.

In certain embodiments, the transfer control system can include at least one transfer control valve. The at least one transfer control valve can output a transfer control pressure on one or more third pressure control lines. The at least one transfer control valve can be in fluid communication with the transfer valve via the one or more third pressure control lines to control a position of the transfer valve via the transfer control pressure on the one or more third pressure control lines.

In certain embodiments, the transfer control system can further include a controller configured to control the at least one transfer control valve to change the position of the transfer valve. In a first mode, the controller can be configured to control the at least one transfer control valve to position the transfer valve in the first position. In a second mode, the controller can be configured to control the at least one transfer control valve to position the transfer valve in the second position. In a third mode, the controller can be configured to control the at least one transfer control valve to position the transfer valve in the third position.

In certain embodiments, the transfer valve can include one or more biasing members configured to bias the transfer valve. In at least one of the first position, second position, or third position, the transfer valve can be force-balanced by the one or more biasing members and the transfer control pressure from the at least one transfer control valve.

In certain embodiments, the first controllable valve and the second controllable valve can be electro-hydraulic servo valves (EHSVs). The first controllable valve, the second controllable valve, and the at least one transfer control valve can be fluidly connected to one or more input lines to receive an input pressure from a pressure supply. The one or more input lines can include a high pressure line and a return line. The first functional system and the second functional system each can include a plurality of actuators.

In certain embodiments, the at least one transfer control valve can be an EHSV. The one or more third pressure control lines can include a first transfer EHSV control line and a second transfer EHSV control line. The first transfer EHSV control line can be fluidly connected to a first portion of the transfer valve and the second transfer EHSV control line can be fluidly connected to a second portion of the transfer valve to control a pressure differential across the transfer valve to control the position of the transfer valve.

In certain embodiments, the transfer control system can include a position sensor which can be configured to sense a position of the transfer valve. The position sensor can be connected to the controller to provide the controller with position signals. The controller can be configured to command the at least one transfer control valve to control the position of the transfer valve as a function of the position signals received from the position sensor to position the transfer valve in at least one of the first position, the second position, or third position.

In certain embodiments, the position sensor can be a variable displacement transformer (VDT). The transfer valve can include a biasing member configured to bias the transfer valve to one of the first position, the second position, or the third position.

In certain embodiments, the at least one transfer control valve can include a first solenoid and a second solenoid. The one or more third pressure control lines can include a first solenoid control line and a second solenoid control line. The first solenoid control line can be connected to a first portion of the transfer valve and the second solenoid control line can be connected to a second portion of the transfer valve to control a pressure differential across the transfer valve to control the position of the transfer valve.

In certain embodiments, the controller can be configured to command the first solenoid and the second solenoid to be in a first state in the first mode. The controller can be configured to command the second solenoid to be in a second state and the first solenoid to remain in the first state in the second mode. The controller can be configured to command the second solenoid to be in the second state and the first solenoid to be in the first state in the third mode. In the first mode, the pressure differential across the transfer valve can be balanced or zero. In the second mode and third mode, the pressure differential may not be balanced.

In certain embodiments, the transfer valve can include a first biasing member connected to the first end of the transfer valve and a second biasing member connected to the second end of the transfer valve. The first and second biasing members can be configured to bias the transfer valve to one of the first position, the second position, or the third position.

In certain embodiments, the system can further include a first orifice disposed between the at least one input lines and the first solenoid control line and a second orifice can be disposed between the at least one input lines and the second solenoid control line. The first orifice and the second orifice can be configured to restrict pressure change and/or flow on the first and second solenoid control lines.

In certain embodiments, the transfer valve can include a housing and a spool. The housing can include one or more first functional system ports configured to fluidly connect to one or more first functional system lines. The housing can include one or more second functional system ports configured to fluidly connect to one or more second functional system lines. The housing can include one or more the first controllable valve ports configured to fluidly connect to the one or more first pressure control lines. The housing can include one or more second controllable valve ports configured to fluidly connect to the one or more second pressure control lines. The housing can include one or more transfer control ports configured to connect to the one or more third pressure control lines to be in fluid communication with the transfer control valve.

The spool can be configured to move within the housing between the first position, the second position, and third position to selectively communicate the one or more first functional system ports and the one or more second functional system ports with the one or more first controllable valve ports or the one or more second controllable valve ports as a function of a pressure differential between the one or more transfer control ports.

In certain embodiments, in the first position, the spool can be configured to fluidly communicate the one or more first functional system ports to the one or more the first controllable valve ports and the one or more second functional system ports to the one or more the second controllable valve ports, and can be configured to block communication between the one or more first functional system ports from the one or more second controllable valve ports and the one or more second functional system ports from the one or more first controllable valve ports.

In certain embodiments, in the second position, the spool can be configured to fluidly communicate the one or more second functional system ports to the one or more the first controllable valve ports and the one or more second functional system ports to the one or more the second controllable valve ports, and can be configured to block communication between the one or more first functional system ports from the one or more first controllable valve ports and the one or more first functional system ports from the one or more second controllable valve ports.

In certain embodiments, in the third position, the spool can be configured to fluidly communicate the one or more first functional system ports to the one or more the first controllable valve ports and the one or more first functional system ports to the one or more the second controllable valve ports, and can be configured to block communication between the one or more second functional system ports from the one or more second controllable valve ports and the one or more second functional system ports from the one or more first controllable valve ports.

These and other features of the embodiments of the subject disclosure will become more readily apparent to those skilled in the art from the following detailed description taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, embodiments thereof will be described in detail herein below with reference to certain figures, wherein:
Fig. 1 is a schematic view of an embodiment of a system in accordance with this disclosure, shown in an embodiment of a first mode where the transfer valve is in a first position;
Fig 2 is a schematic view of the embodiment of Fig. 1, shown in an embodiment of a second mode where the transfer valve is in a second position;
Fig. 3 is a schematic view of the embodiment of Fig. 1, shown in an embodiment of a third mode where the transfer valve is in a third position;
Fig. 4 is a schematic view of an embodiment of a system in accordance with this disclosure, shown in an embodiment of a first mode where a transfer valve is in a first position;
Fig. 5 is a schematic view of the embodiment of Fig. 4, shown in an embodiment of a second mode where the transfer valve is in a second position;
Fig. 6 is a schematic view of the embodiment of Fig. 4, shown in an embodiment of a third mode where the transfer valve is in a third position; Fig. 7 is a cross-sectional view of an embodiment of a valve housing in accordance with this disclosure, showing an embodiment of a spool in the first position;
Fig. 8 is a cross-sectional view of the embodiment of Fig. 7, showing the spool in the second position; and
Fig. 9 is a cross-sectional view of the embodiment of Fig. 7, showing the spool in the third position.

### DETAILED DESCRIPTION

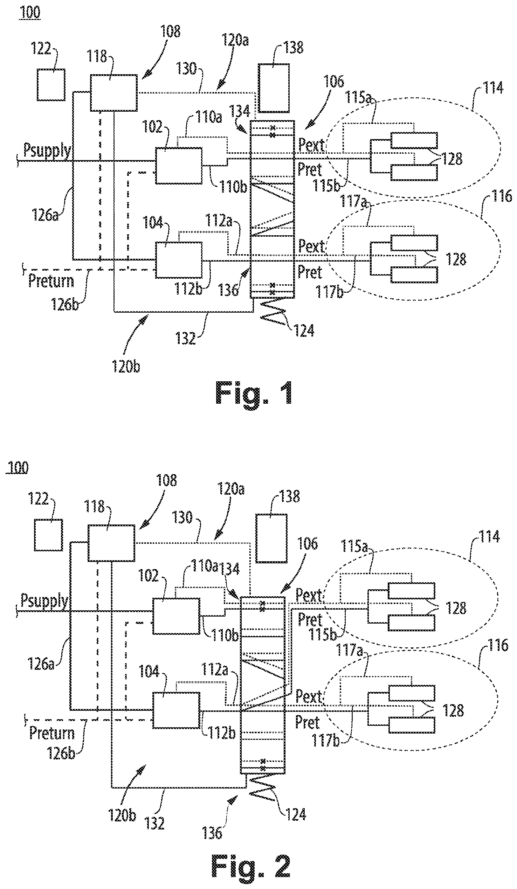

Reference will now be made to the drawings wherein like reference numerals identify similar structural features or aspects of the subject disclosure. For purposes of explanation and illustration, and not limitation, an illustrative view of an embodiment of a system in accordance with the disclosure is shown in Fig. 1 and is designated generally by reference character 100. Other embodiments and/or aspects of this disclosure are shown in Figs. 2-9.

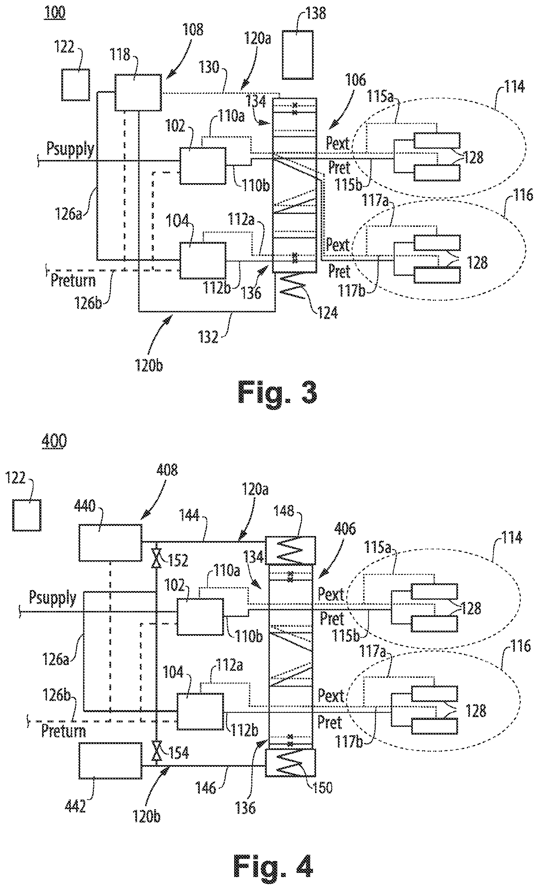

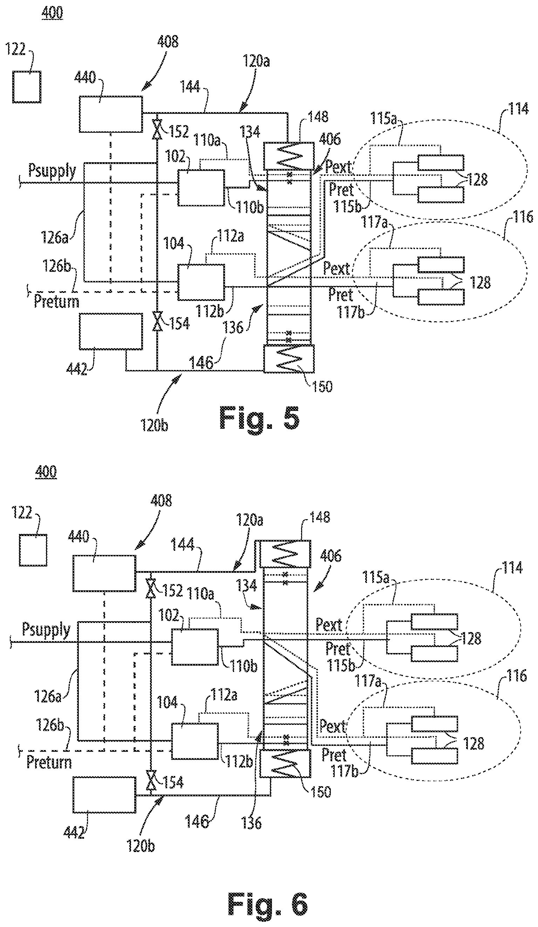

In accordance with at least one aspect of this disclosure, e.g, as shown in the embodiments of Figs. 1-6, a system 100, 400 can include a first controllable valve 102, a second controllable valve 104, a transfer valve 106, 406, and a transfer control system 108, 408. The first controllable valve 102 can be configured to output a control pressure on one or more first pressure control lines 110a, 110b (e.g., two as shown to provide a differential pressure). The second controllable valve 104 can be configured to output a control pressure on one or more second pressure control lines 112a, 112b (e.g., two as shown to provide a differential pressure). The transfer valve 106, 406 can be in fluid communication with the first controllable valve 102 and the second controllable valve 104. The transfer valve 106, 406 can be configured to move between a first position, e.g., as shown in Figs. 1 and 4, a second position, e.g., as shown in Figs. 2 and 5, and a third position, e.g., as shown in Figs. 3 and 6.

As shown in Figs. 1 and 4, the transfer valve 106, 406 can be configured to fluidly communicate the one or more first pressure control lines 110a, 110b to a first functional system 114 and the one or more second pressure control lines 112a, 112b to a second functional system 116 in the first position. As shown in Figs. 2 and 5, the transfer valve 106, 406 can be configured to fluidly communicate the one or more second pressure control lines 112a, 112b to the first functional system 114 and the second functional system 116 in the second position (e.g., such that the one or more first pressure control lines 110a, 110b are not in fluid communication with either functional system 114, 116). As shown in Figs. 3 and 6, the transfer valve 106, 406 can be configured to fluidly communicate the one or more first pressure control lines 110a, 110b to the first functional system 114 and the second functional system 116 in the third position (e.g., such that the one or more second control lines 112a, 112b are not in fluid communication with either functional system 114, 116). The transfer control system 108, 408 can be configured to control a position of the transfer valve 106, 406 between the first, second, and third position, e.g., as shown in Figs 1-6.

In certain embodiments as shown in Figs. 1-6, the transfer control system 108, 408 can include at least one transfer control valve 118, 440, 442. The at least one transfer control valve 118, 440, 442 can output a transfer control pressure on one or more third pressure control lines 120a, 120b. The at least one transfer control valve 118, 440, 442 can be in fluid communication with the transfer valve 106, 406 via the one or more third pressure control lines 120a, 120b to control a position of the transfer valve 106, 406 via the transfer control pressure on the one or more third pressure control lines 120a, 120b.

In certain embodiments as shown in Figs. 1-6, the transfer control system 108, 408 can further include a controller 122 (e.g., a FADEC) configured to control the at least one transfer control valve 118, 440, 442 to change the position of the transfer valve 106, 406. The controller 122 can also be configured to control EHSV's 102 and 104 in order to control the actuator systems 114 and 128. In a first mode, e.g., as shown in Fig. 1, the controller 122 can be configured to control the at least one transfer control valve 118 to position the transfer valve 106 in the first position (e.g., both the first and second controllable valves 102, 104 working under normal operations in the first mode). In a second mode, e.g., as shown in Fig. 2, the controller 122 can be configured to control the at least one transfer control valve 118 to position the transfer valve in the second position (e.g., in the event of failure of the first controllable valve). In a third mode, e.g., as shown in Fig. 3, the controller 122 can be configured to control the at least one transfer control valve 118 to position the transfer valve 106 in the third position (e.g., in the event of failure of the second controllable valve).

In certain embodiments, e.g. as shown in Figs. 1-3, the transfer valve 106, 406 can include one or more biasing members (e.g., springs) 124 configured to bias the transfer valve 106, 406. For example, as shown in Figs. 1-3, a single biasing member 124 can be used to bias in a single direction (e.g., as a fail safe to place the transfer valve in a known position with transfer control valve 118 failure). In the first position, second position, and third position, the transfer valve 106 is force-balanced by the one or more biasing members 124 and the transfer control pressure from the at least one transfer control valve 118.

In certain embodiments, the first controllable valve 102 and the second controllable valve 104 can be electro-hydraulic servo valves (EHSVs). The first controllable valve 102, the second controllable valve 104, and the at least one transfer control valve 118 can be fluidly connected to one or more input lines 126a, 126b to receive an input pressure from a pressure supply. The one or more input lines 126a can include a high pressure line and a return line 126b. The first functional system 114 and the second functional system 116 each can include a plurality of actuators 128. In certain embodiments, all system functionalities can be controlled by the controller 122.

In certain embodiments, e.g., as shown in Figs. 1-3, the at least one transfer control valve 118 can be an EHSV. The one or more third pressure control lines 120a, 120b can include a first transfer EHSV control line 130 and a second transfer EHSV control line 132. The first transfer EHSV control line 130 can be fluidly connected to a first portion 134 of the transfer valve 106 and the second transfer EHSV control line 132 can be fluidly connected to a second portion 136 of the transfer valve 106 to control a pressure differential across the transfer valve 106 to control the position of the transfer valve 106.

In certain embodiments, e.g., as shown in Figs., 1-3, the transfer control system 108 can include a position sensor 138 which can be configured to sense a position of the transfer valve 106. The position sensor 138 can be connected to the controller 122 to provide the controller 122 with position signals. The controller 122 can be configured to command the at least one transfer control valve 118 to control the position of the transfer valve 106 as a function of the position signals received from the position sensor 138 to position the transfer valve 106 in at least one of the first position, the second position, or third position. In certain embodiments, the position sensor 138 can be a variable displacement transformer (VDT).

The transfer valve 106 can include a biasing member 124 configured to bias the transfer valve 106 to one of the first position, the second position, or the third position. The position sensor 138 can allow feedback to control the position of the transfer valve, e.g., to ensure it is in the desired position of the first position, the second position, and/or the third position.

In certain embodiments, e.g., as shown in Figs. 4-6, the at least one transfer control valve 440, 442 can include a first solenoid 440 and a second solenoid 442. The one or more third pressure control lines 120a, 120b can include a first solenoid control line 144 and a second solenoid control line 146. The first solenoid control line 144 can be connected to a first portion 134 of the transfer valve 106 and the second solenoid control line 146 can be connected to a second portion 136 of the transfer valve 106 to control a pressure differential across the transfer valve 106 to control the position of the transfer valve 106.

In certain embodiments, the controller 122 can be configured to command the first solenoid 440 and the second solenoid 442 to be in a first state in the first mode, e.g., as shown in Fig. 4. The controller 122 can be configured to command the second solenoid 442 to be in a second state and the first solenoid 440 to remain in the first state in the second mode, e.g., as shown in Fig. 5. The controller 122 can be configured to command the second solenoid 442 to be in the second state and the first solenoid 440 to be in the first state in the third mode, e.g., as shown in Fig. 6.

In the first mode, the pressure differential across the transfer valve 106, 406 can be balanced or zero. In the second mode and third mode, the pressure differential may not be balanced (e.g., one side is higher than the other causing change of position of the transfer valve 406).

In certain embodiments, e.g., as shown in Figs. 4-6, the transfer valve 406 can include a first biasing member 148 connected to the first end 134 of the transfer valve 406 and a second biasing member 150 connected to the second end 136 of the transfer valve 406. The first and second biasing members 148, 150 can be configured to bias the transfer valve 406 to one of the first position, the second position, or the third position. For example, the biasing members 148, 150 can hold the transfer valve 406 in the first position with a predetermined pressure difference (e.g., neutral pressure differential) on the solenoid control lines 144, 146. Such embodiments can be utilized without a feedback system/position sensor.

In certain embodiments, e.g., as shown in Figs. 4-6, the system 400 can further include a first orifice 152 (e.g., a flow restriction) disposed between the at least one input lines 126a and the first solenoid control line 144 and a second orifice 154 (e.g., a flow restriction) disposed between the at least one input lines 126b and the second solenoid control line 146. The first orifice 152 and the second orifice 154 can be configured to restrict pressure change and/or flow on the first and second solenoid control lines 144, 146.

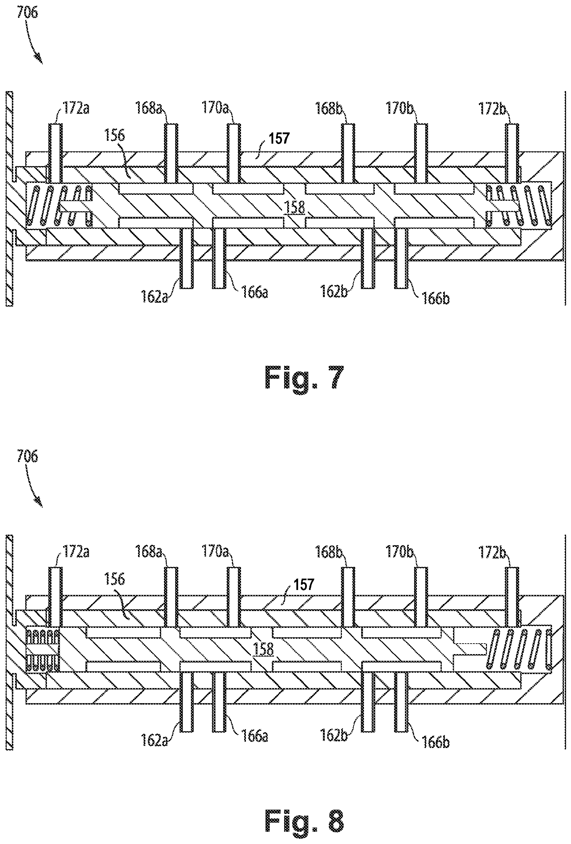

With reference to Figs. 7-9, in certain embodiments, an embodiment of a transfer valve 706 (e.g., which can be used as transfer valve 406 and/or 106 for example) can include a sleeve 156, and a spool 158 which are contained within housing 157. The sleeve 156 can include one or more first functional system ports 162a, 162b configured to fluidly connect to one or more first functional system lines 115a, 115b (e.g., as shown in Figs. 1-6). The sleeve 156 can include one or more second functional system ports 166a, 166b configured to fluidly connect to one or more second functional system lines 117a, 117b. The sleeve 156 can include one or more the first controllable valve ports 168a, 168b configured to fluidly connect to the one or more first pressure control lines 110a 110b. The sleeve can include one or more second controllable valve ports 170a, 170b configured to fluidly connect to the one or more second pressure control lines 112a, 112b. The sleeve 156 can include one or more transfer control ports 172a, 172b configured to connect to the one or more third pressure control lines 120a, 120b to be in fluid communication with the transfer control valve 408. The sleeve 156 is disposed within the housing 157 and contains sealing features (e.g., a sealed annulus) to allow all fluid ports previously mentioned to be passed from the housing 157 through labeled ports within the sleeve 156 with controlled positions such that valve positions one, two, and three correctly transfer flow as detailed.

The spool 158 can be configured to move within the sleeve 156 between the first position, the second position, and third position to selectively communicate the one or more first functional system ports 168a, 168b and the one or more second functional system ports 170a, 170b with the one or more first controllable valve ports 168a, 168b or the one or more second controllable valve ports 170a, 170b as a function of a pressure differential between the one or more transfer control ports 172a, 172b.

In certain embodiments, in the first position, e.g., as shown in Fig. 7, the spool 158 can be configured (e.g., via one or more lands and/or annular passages as shown) to fluidly communicate the one or more first functional system ports 162a, 162b to the one or more the first controllable valve ports 168a, 168b and the one or more second functional system ports 166a, 166b to the one or more the second controllable valve ports 170a, 170b, and can be configured to block communication between the one or more first functional system ports 162a, 162b from the one or more second controllable valve ports 170a, 170b and the one or more second functional system ports 166a, 166b from the one or more first controllable valve ports 168a, 168b.

In certain embodiments, in the second position, e.g., as shown in Fig. 8, the spool 158 can be configured (e.g., via one or more lands and/or annular passages as shown) to fluidly communicate both the one or more second functional system ports 166 and 162 to the one or more second controllable valve ports 170 and can be configured to block communication from the one or more first controllable valve ports 168a.

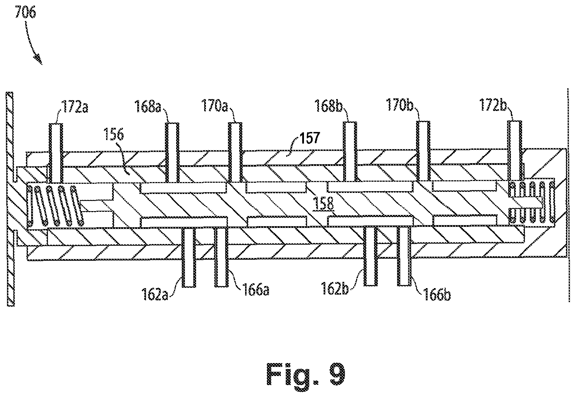

In certain embodiments, in the third position, e.g., as shown in Fig. 9, the spool 158 can be configured (e.g., via one or more lands and/or annular passages as shown) to fluidly communicate both one or more first functional system ports 162 and 166 to the one or more the first controllable valve ports 168a and can be configured to block from the one or more second controllable valve ports 170a, 170b.

Certain embodiments can include a three-way transfer valve to support split control effector actuators with common back-up. Transfer valves can be used to provide back-up capability. Embodiments can utilize a three (or more) position transfer valve to allow normal mode operation with at least two backup positions, which can eliminate the need for additional system control (EHSV, TV and manifold). For example, a three-way transfer valve can be positioned in a center/normal operating position by a spring and pressure balanced load. Backup positions can be achieved by changing pressure control on one or both ends of the transfer valve via a solenoid and restrictor circuitry, or other suitable transfer control valve system (e.g., a transfer EHSV and VDT), e.g., as disclosed above.

Embodiments can be applied to a nozzle system consisting of two sets of actuators (e.g., systems 1 and 2 as shown) that can be controlled via a common manifold. In normal operation, system 1 can be controlled by a first EHSV and system 2 can be controlled by a second EHSV. In the event of an EHSV failure the transfer valve can be shuttled to allow the remaining EHSV to control both actuation systems.

Traditionally, for engine nozzle actuator systems to have separate systems to independently control actuator groups, it would require separate manifolds, transfer valves, and EHSVs. However, certain embodiments can eliminate the need for a second manifold thereby reducing the weight, envelope, fuel system leakages, harnessing, etc.

Embodiments (e.g., the controller 122) can include any suitable computer hardware and/or software module(s) to perform any suitable function (e.g., as disclosed herein). As will be appreciated by those skilled in the art, aspects of the present disclosure may be embodied as a system, method or computer program product. Accordingly, aspects of this disclosure may take the form of an entirely hardware embodiment, an entirely software embodiment (including firmware, resident software, micro-code, etc.), or an embodiment combining software and hardware aspects, all possibilities of which can be referred to herein as a "circuit," "module," or "system." A "circuit," "module," or "system" can include one or more portions of one or more separate physical hardware and/or software components that can together perform the disclosed function of the "circuit," "module," or "system", or a "circuit," "module," or "system" can be a single self-contained unit (e.g., of hardware and/or software). Furthermore, aspects of this disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber cable, RF, etc., or any suitable combination of the foregoing.

Computer program code for carrying out operations for aspects of this disclosure may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of this disclosure may be described above with reference to flowchart illustrations and/or block diagrams of methods, apparatus (systems) and computer program products according to embodiments of this disclosure. It will be understood that each block of any flowchart illustrations and/or block diagrams, and combinations of blocks in any flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in any flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified herein.

Those having ordinary skill in the art understand that any numerical values disclosed herein can be exact values or can be values within a range. Further, any terms of approximation (e.g., "about", "approximately", "around") used in this disclosure can mean the stated value within a range. For example, in certain embodiments, the range can be within (plus or minus) 20%, or within 10%, or within 5%, or within 2%, or within any other suitable percentage or number as appreciated by those having ordinary skill in the art (e.g., for known tolerance limits or error ranges).

The articles "a", "an", and "the" as used herein and in the appended claims are used herein to refer to one or to more than one (i.e., to at least one) of the grammatical object of the article unless the context clearly indicates otherwise. By way of example, "an element" means one element or more than one element.

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of" or "exactly one of," or, when used in the claims, "consisting of," will refer to the inclusion of exactly one element of a number or list of elements. In general, the term "or" as used herein shall only be interpreted as indicating exclusive alternatives (i.e., "one or the other but not both") when preceded by terms of exclusivity, such as "either," "one of," "only one of," or "exactly one of."

Any suitable combination(s) of any disclosed embodiments and/or any suitable portion(s) thereof are contemplated herein as appreciated by those having ordinary skill in the art in view of this disclosure.

The embodiments of the present disclosure, as described above and shown in the drawings, provide for improvement in the art to which they pertain. While the subject disclosure includes reference to certain embodiments, those skilled in the art will readily appreciate that changes and/or modifications may be made thereto without departing from the spirit and scope of the subject disclosure.

## Claims

1. A system, comprising:
a first controllable valve (102) configured to output a control pressure on one or more first pressure control lines (110a, 110b);
a second controllable valve (104) configured to output a control pressure on one or more second pressure control lines (112a, 112b);
a transfer valve (106, 406) in fluid communication with the first controllable valve (102) and the second controllable valve (104), wherein the transfer valve (106, 406) is configured to move between a first position, a second position, and a third position, wherein the transfer valve (106, 406) is configured to:
fluidly communicate the one or more first pressure control lines (1 10a, 110b) to a first functional system (114) and the one or more second pressure control lines (112a, 112b) to a second functional system (116) in the first position;
fluidly communicate the one or more second pressure control lines (112a, 112b) to the first functional system (114) and the second functional system (116) in the second position; and
fluidly communicate the one or more first pressure control lines (110a, 110b) to the first functional system (114) and the second functional system (116) in the third position; and
a transfer control system configured to control a position of the transfer valve (106, 406) between the first, second, and third position.

2. The system of claim 1, wherein the transfer control system includes at least one transfer control valve, wherein the at least one transfer control valve outputs a transfer control pressure on one or more third pressure control lines, wherein the at least one transfer control valve is in fluid communication with the transfer valve (106, 406) via the one or more third pressure control lines to control a position of the transfer valve (106, 406) via the transfer control pressure on the one or more third pressure control lines.

3. The system of claim 2, wherein the transfer control system further includes a controller configured to control the at least one transfer control valve to change the position of the transfer valve (106, 406), and optionally wherein in a first mode, the controller is configured to control the at least one transfer control valve to position the transfer valve (106, 406) in the first position, and optionally wherein in a second mode, the controller is configured to control the at least one transfer control valve to position the transfer valve (106, 406) in the second position, and optionally wherein in a third mode, the controller is configured to control the at least one transfer control valve to position the transfer valve (106, 406) in the third position.

4. The system of claim 2 or 3, wherein the transfer valve (106, 406) includes one or more biasing members configured to bias the transfer valve (106, 406), and optionally wherein in at least one of the first position, second position, or third position, the transfer valve (106, 406) is force-balanced by the one or more biasing members and the transfer control pressure from the at least one transfer control valve.

5. The system of any preceding claim, wherein the first controllable valve (102) and the second controllable valve (104) are electro-hydraulic servo valves (EHSVs).

6. The system of claim 2, wherein the first controllable valve (102) the second controllable valve (104), and the at least one transfer control valve are fluidly connected to one or more input lines to receive an input pressure from a pressure supply.

7. The system of claim 6, wherein the one or more input lines include a high pressure line and a return line.

8. The system of any preceding claim, wherein the first functional system (114) and the second functional system (116) each include a plurality of actuators.

9. The system of claim 3, wherein the at least one transfer control valve is an EHSV, and optionally wherein the one or more third pressure control lines include a first transfer EHSV control line and a second transfer EHSV control line, wherein the first transfer EHSV control line is fluidly connected to a first portion of the transfer valve (106, 406) and the second transfer EHSV control line is fluidly connected to a second portion of the transfer valve (106, 406) to control a pressure differential across the transfer valve (106, 406) to control the position of the transfer valve (106, 406).

10. The system of claim 9, wherein the transfer control system includes a position sensor configured to sense a position of the transfer valve (106, 406), wherein the position sensor is connected to the controller to provide the controller with position signals, and optionally wherein the controller is configured to command the at least one transfer control valve to control the position of the transfer valve (106, 406) as a function of the position signals received from the position sensor to position the transfer valve (106, 406) in at least one of the first position, the second position, or third position.

11. The system of claim 9, wherein the transfer valve (106, 406) includes a biasing member configured to bias the transfer valve (106, 406) to one of the first position, the second position, or the third position.

12. The system of claim 3, wherein the at least one transfer control valve includes a first solenoid and a second solenoid, and optionally wherein the one or more third pressure control lines include a first solenoid control line and a second solenoid control line, wherein the first solenoid control line is connected to a first portion of the transfer valve (106, 406) and the second solenoid control line is connected to a second portion of the transfer valve (106, 406) to control a pressure differential across the transfer valve (106, 406) to control the position of the transfer valve (106, 406).

13. The system of claim 12, wherein the controller is configured to command the first solenoid and the second solenoid to be in a first state in the first mode, wherein the controller is configured to command the second solenoid to be in a second state and the first solenoid to remain in the first state in the second mode, and wherein the controller is configured to command the second solenoid to be in the second state and the first solenoid to be in the first state in the third mode, and optionally wherein in the first mode, the pressure differential across the transfer valve (106, 406) is balanced or zero, wherein in the second mode and third mode, the pressure differential is not balanced.

14. The system of claim 13, wherein the transfer valve (106, 406) includes a first biasing member connected to the first end of the transfer valve (106, 406) and a second biasing member connected to the second end of the transfer valve (106, 406), wherein the first and second biasing members are configured to bias the transfer valve (106, 406) to one of the first position, the second position, or the third position.

15. The system of claim 2, wherein the transfer valve (106, 406) includes:
a housing comprising:
one or more first functional system ports (162a, 162b) configured to fluidly connect to one or more first functional system lines;
one or more second functional system ports (166a, 166b) configured to fluidly connect to one or more second functional system lines;
one or more the first controllable valve ports (168a, 168b) configured to fluidly connect to the one or more first pressure control lines (1 10a, 1 10b);
one or more the second controllable valve ports (170a, 170b)) configured to fluidly connect to the one or more second pressure control lines (112a, 112b);
one or more transfer control ports configured to connect to the one or more third pressure control lines to be in fluid communication with the the transfer control valve;
and
a spool configured to move within the housing between the first position, the second position, and third position to selectively communicate the one or more first functional system ports (162a, 162b) and the one or more second functional system ports (166a, 166b) with the one or more first controllable valve ports (168a, 168b) or the one or more second controllable valve ports (170a, 170b)) as a function of a pressure differential between the one or more transfer control ports, and optionally wherein in the first position, the spool is configured to fluidly communicate the one or more first functional system ports (162a, 162b) to the one or more the first controllable valve ports (168a, 168b) and the one or more second functional system ports (166a, 166b) to the one or more the second controllable valve ports (170a, 170b)), and is configured to block communication between the one or more first functional system ports (162a, 162b) from the one or more second controllable valve ports (170a, 170b)) and the one or more second functional system ports (166a, 166b) from the one or more first controllable valve ports (168a, 168b), and/or wherein in the second position, the spool is configured to fluidly communicate the one or more second functional system ports (166a, 166b) to the one or more the first controllable valve ports (168a, 168b) and the one or more second functional system ports (166a, 166b) to the one or more the second controllable valve ports (170a, 170b)), and is configured to block communication between the one or more first functional system ports (162a, 162b) from the one or more first controllable valve ports (168a, 168b) and the one or more first functional system ports (162a, 162b) from the one or more second controllable valve ports (170a, 170b)); and/or wherein in the third position, the spool is configured to fluidly communicate the one or more first functional system ports (162a, 162b) to the one or more the first controllable valve ports (168a, 168b) and the one or more first functional system ports (162a, 162b) to the one or more the second controllable valve ports (170a, 170b)), and is configured to block communication between the one or more second functional system ports (166a, 166b) from the one or more second controllable valve ports (170a, 170b)) and the one or more second functional system ports (166a, 166b) from the one or more first controllable valve ports (168a, 168b).
